# EUROPEAN PATENT APPLICATION

(11) **EP 2 620 415 A1**
(43) Date of publication of application: **31.07.2013**
(21) Application number: 12000542.6
(22) Date of filing: 27.01.2012
(51) Int. Cl.: C02F 1/48, H01F 1/00, E21B 43/24, E21B 41/00

(54) **Apparatus and method for magnetically conditionng fluids**

(71) Applicant: Environmental Technologies International, Inc., Naples FL 34102 (US)
(72) Inventor: Freese, Matthew J., Estero, FL 33928 (US)
(74) Representative: Schweitzer, Klaus

(57) **Abstract**

Methods and apparatus for fluid conditioning to reduce scaling, inactivate microbes, reduce surface tension, maintain fluid composition, and improve pumping are provided for use in treating crude petroleum, industrial water, agricultural water, municipal water supplies, or any fluid flow system and comprise electromagnets of variable control that can be powered or in which a current can be induced by a permanent magnet. Magnetic field direction and intensity can be selected depending on the nature of the fluid and in some embodiments, the field can be varied during operation, including pulsing and variably selecting one or more field directions and intensities, or combinations thereof, during operation. A non-magnetic fluid transfer conduit section has at least one conductor assembly mounted about the section. In one embodiment, the conductor assembly comprises a concentric, tilted double helix coil or multipole coil. If desired, one or more rotating or reciprocating permanent magnets may be located in magnetic field contact with one or more multipole conductor assemblies and rotated or reciprocated to induce a current in the multipole conductor assembly, thereby to induce a magnetic field in the conductor assembly.

## Description

### FIELD OF THE INVENTION

The invention relates to apparatus and methods for treating flowing fluids in a magnetic field, and particularly to improving one or more characteristics of a fluid or gas or fluid and gas mixture by subjecting the fluid to a magnetic field.

### BACKGROUND OF THE INVENTION

Numerous references describe the use of magnets of various types in connection with treating fluids and for a variety of purposes. For example, U.S. Patent No. 5,465,789 describes using the reciprocating motion of permanent magnets mounted on the central rod of a wellbore in a subterranean formation to energize stationary electrical coils located beneath the pump. The magnetic flux resulting from the up-and-down movement of the rod is said to extend into the surrounding reservoir formation and to attract magnetically conductive particles to the wellbore. The magnetic particles are said to promote hydrocarbons in the formation migrating to the well bore, thereby increasing production. U.S. Patent Application Publication No. US 2009/0079199 describes an electrical system for a sucker rod pump in which permanent magnets are mounted on a non-magnetic portion of a rod string to energize an electrical coil wound outside the production tubing. The electrical coils transmit current to operate pressure sensors thereby permitting monitoring of low liquid levels in the wellbore without the requirement of batteries to operate the pressure sensors. Holland U.S. Patent No. 8,066,886 describes a coiled electrical conductor sleeve mounted about a magnetically conductive conduit segment that when energized and programmed to switch on and off establishes a pulsed magnetic field having flux lines directed along the fluid flow path and concentrated in a plurality of distinct areas along the longitudinal axis of the conduit. Non-magnetic coupling segments are said to concentrate the magnetic field at the interface with the magnetic segment. The apparatus is said to prevent the formation and accumulation of contaminants, including biological contaminants, to facilitate irrigation by reducing surface tension, and to facilitate oil and water separation systems. Alcocer U.S. Patent No. 5,673,721 describes an electromagnetic fluid conditioning apparatus and method in which a powered coil of insulated wire is embedded in a nonmagnetic housing sleeve mounted over a fluid transfer pipe. The combined electrical and magnetic fields, which are perpendicular to each other, are said to control paraffin and asphaltene deposition. The fluid transfer pipe is lined in plastic to preclude direct contact with the fluid being treated. Mai U.S. Patent No. 8,066,817 describes a method and apparatus for reducing deposits in a petroleum flow line in which field windings are applied to fluid flow pipes so as to create a plurality of magnetic axes that increase the efficiency of oil production by reducing deposition of waxes and the like. The above patents and published applications illustrate the use of magnets and electromagnetic coils in fluid processing, especially in the oil and gas industry, but should not be considered exhaustive.

Meinke U.S. Patent No. 7,889,042 describes a helical coil design and method of manufacture of helical coils, which coils are said to be useful for magnetic separations of unwanted components from water and other liquids in which impurities are diverted from a flowing stream based on the magnetic properties of the impurities. Concentric tilted double-helix magnets are disclosed that can be constructed as a dipole or multipole. Arrays of stacked coils are proposed for enhancing the field strength, volume, and robustness for diverting impurities from flowing streams. The magnets are also said to be useful for steering medical devices through blood vessels, beam steering for charged particle radiation therapy, ion beam implantation, and high energy particle accelerators.

The benefits of the treatment of a wide variety of fluids for an equally wide variety of purposes with magnetic and electromagnetic fields have been considered many times over. Yet, substantial problems remain in the design and implementation of devices and methods for magnetic and electromagnetic fluid treatment. It would be desirable to provide alternative solutions to realize the many benefits of magnetic and electromagnetic fluid treatment and conditioning.

### SUMMARY OF THE INVENTION

The invention provides methods and apparatus for conditioning fluids that use the electromagnet coil designs disclosed in Meinke U.S. Patent No. 7,889,042; Goodzeit U.S. Patent No. 6,921,042; and others to condition fluids by providing flexible, controllable, and programmable maintenance of the direction, volume, and strength of the magnetic field applied to fluids of various kinds. The methods and apparatus of the invention are believed to permit, for example, improved oil extraction from underground reservoirs by limiting corrosion, scaling, and deposits of paraffin and the like substances that clog production tubes, and inactivating microbes; improved treatment of industrial and municipal water supplies by reducing scaling, microbial contamination, and surface tension for improved wetting performance; and improved treatment and processing of fluids of all kinds having some polar character by modulating crystallization and substantially reducing flocculation and coagulation of substances that tend to precipitate out of the fluid and impede fluid flow by adhering to fluid transfer lines.

The coils may be independently powered by a discreet source and controlled as to current density, field uniformity, and field configuration. In one embodiment, the invention includes inducing a current in the coil, typically a resistive coil, and establishes an electromagnetic field by reciprocating motion of a powerful permanent magnet mounted on a rod or pipe or other fluid transfer line, such as the rare earth magnets described in U.S. Patent Application No. US 2010/0206732, the contents of which have been incorporated herein by reference. The interaction of the fields of these powerful permanent magnets with the fields established in helical coils, including double helix coils, is believed to produce a field of unprecedented volume and strength that is controllable and programmable and can be adjusted as to direction, depending on the number of poles in the electromagnetic coil, to respond to continual changes in fluid composition and processing challenges. The coils can be constructed in a virtually unlimited geometry to provide control over the magnetic field produced.

A coil may be mounted about a conduit of any cross-sectional shape. In the case of a round pipe or other fluid transfer section, the coil is an electrical winding configuration or direct helix construction that would typically be mounted about a nonconductive stainless steel, ceramic, or similar threaded pipe section, embedded in an insulating medium, including plastic materials, composite materials, and ceramics known for this purpose. The coil may comprise well known resistive conductors, including copper, and may also comprise advanced composite structures, including carbon nanotubes in a copper matrix. Advanced materials typically can be expected to provide higher current density while generating less heat, which is to achieve high current density at the same temperature or to achieve the same current density at lower temperature than prior devices used for this purpose.

For example, for use in a sucker rod pumping system, the coil could be mounted on a portion of a threaded non-magnetic stainless steel section of production tubing conduit, the insulator layer in which the coil is embedded and supported making up the diameter of the tubing section or even extending beyond it. The insulator layer could also be constructed as a spacer or guide to assist in part in centering the production tubing within the well bore casing. Multiple sections of production tubing could be so constructed and installed to provide a continual, spaced apart or overlapping exposure of the crude petroleum to a magnetic field, if needed, or a single such coil could be used, depending on the circumstances. One or more coils could be powered coils having an input lead for each coil electrically connected to a power source, including an electrical generator connected to a controller. If a permanent magnet is used in connection with the system, including, for example, a rare earth magnet mounted about one or more portions of the sucker rod length adjacent a coil, then the reciprocating motion of the sucker rod will induce a current in the coil. In this embodiment, it is desirable to connect one lead of the coil to ground at the top of the well and the other to the stainless steel tube to preclude electrical corrosion effects on the processing equipment and to impart a voltage to the entire production tube. The coil in this embodiment could also be powered, if desired, by connecting the leads to a controller as previously described.

If the input lead to one or more coils is connected to an electrical generator and controller, then a pulsed or DC electrical signal can be introduced into the fluid flow pipe or transfer conduit and controlled to establish a magnetic field. A typical range for such a field is in the range of 10 to 100 Gauss. The field can be directed in the axial or transverse directions or discreet multiple directions, as desired or simultaneously, by using multipole coil configurations as desired. For example, a double helix coil constructed in accordance with U.S. Patents Nos. 6,921,042; 7,889,942; which have been incorporated herein by reference, and others, can be embedded as described and to produce a uniform field in the transverse or axial directions or at any desired angle to the flow direction. The coil can be constructed to increase the field strength radially outwardly from the rod string axis, which may be particularly useful in connection with permanent magnets mounted on the rod string. The coil can be constructed to increase field strength radially inwardly as well, as described further hereinbelow. Coil configurations can be constructed to establish a field in all directions: axially and transversely and at any direction in between as needed or desired. Controlled and controllable variation in field strength, direction, frequency, and current density should enable control of operational parameters in situ for any given scenario, providing for adjustment to the specific conditions of a wide variety of fluid transfer and conditioning operations.

Thus, the invention provides fluid conditioning apparatus and methods for subjecting a flowing fluid to a magnetic field and conditioning the fluid for obtaining one or more of the following characteristics: to maintain components in suspension, to substantially reduce precipitation of solids from the fluid, to maintain a substantially more uniform viscosity in the fluid, including reducing the pour point of some fluids, to reduce the surface tension of the fluid, and to inactivate microbial components in the fluid, to reduce scaling, corrosion, and to maintain a more uniform pH. In one embodiment, the invention provides for increased pumping efficiency of crude petroleum from underground reservoirs and precludes an undesirable separation of components that can clog the production tube. In additional embodiments, the invention can be applied to petrochemical fluid transfer above ground to improve fluid transfer characteristics. Fuels may be conditioned in accordance with the invention to increase horsepower, improve engine efficiency, and reduce emissions. In another embodiment, the invention can reduce scaling and other precipitate deposits on water conduits and other fluid transfer conduits and reduce the incidence of future scaling or other precipitate deposits in either municipal or industrial settings. The invention can provide inactivation of microbes in drinking water. In another embodiment, the invention can provide for reducing the surface tension of water to improve wetting characteristics, which is believed to be useful particularly for irrigation systems.

The invention imparts these remarkable characteristics to fluids in transfer conduits by providing a coil that is electrically charged or in which a current is induced to create an electromagnetic field, either providing a charged helical coil, multiple charged helical coils, or a coil in which a permanent magnet constructed as arcuate hollow cylinder halves reciprocates to establish a current in the coil, and in which the magnetic field is controllable and adjustable to a variety of fluid flow characteristics.

### BRIEF DESCRIPTION OF THE DRAWINGS

Figure 1 illustrates in a schematic view the basic elements of a sucker-rod pumping system that includes embodiments of the invention;

Figure 2 illustrates a detail section of production tubing in a sucker-rod pumping system taken from Figure 1, which could be any fluid transfer conduit, and within the production tubing, a partial longitudinal section through a sucker rod, the casing, and an electromagnetic concentric tilted double helix coil embedded in an insulator and surrounding the production tube and with electrodes extending therefrom;

Figure 3 illustrates in perspective a portion of a production tube in accordance with the invention and having a section of nonmagnetic tubing encasing, in dashed lines, an electromagnetic concentric tilted double helix coil embedded in an insulator;

Figure 4 illustrates a partially exploded view of the non-magnetic section of the production tube of Figure 3 having threads on each end for attachment to and forming part of a production tubee;

Figure 5 is a flow diagram illustrating the steps taken in one embodiment of the practice of the method of the invention;

Figures 6, 7, and 8 correspond to Figures 2, 3 and 4 and illustrate in addition a reciprocating or rotating permanent magnet located on the sucker rod centered inside the production tube for use in imparting a current to the coil;

Figure 9 illustrates a matched pair of prior art permanent magnets of the type that may be used in connection with the practice of the invention and can be mounted on the rod string of a sucker-rod pumping system or other such system for reciprocating or rotational motion to induce current in an electromagnetic coil;

Figure 10 is a flow diagram illustrating the steps taken in one embodiment of the practice of the method of the invention;

Figure 11 is a detail section similar to that of Figure 2 and illustrates a multicoil electromagnet structure;

Figures 12 through 15 illustrate various coil windings and the directions of the magnetic fields that result;

Figure 16 illustrates a detailed portion of a coil mounted over a non-magnetic fluid transfer conduit and embedded in an insulating matrix, the insulating matrix having cooling channels to dissipate heat into the surrounding medium in which the transfer conduit is located, whether air or other gas, water, soil, or underground formation; and

Figure 17 illustrates a concentric tilted double helix coil similar to that of Figure 12 and mounted about a fluid transfer conduit, which could be a conduit for water or other fluids, with the leads connected to an electrical controller and generator for controlling the direction and intensity of the magnetic field and otherwise causing current to flow through the coil.

### DETAILED DESCRIPTION OF THE INVENTION

The invention will now be described more fully hereinafter with reference to the accompanying drawings, in which some, but not all concepts of the invention are illustrated. Indeed, the invention may be embodied in many different forms and should not be construed as limited to the examples set forth herein; rather, the embodiments provided in this disclosure are intended to satisfy applicable legal requirements.

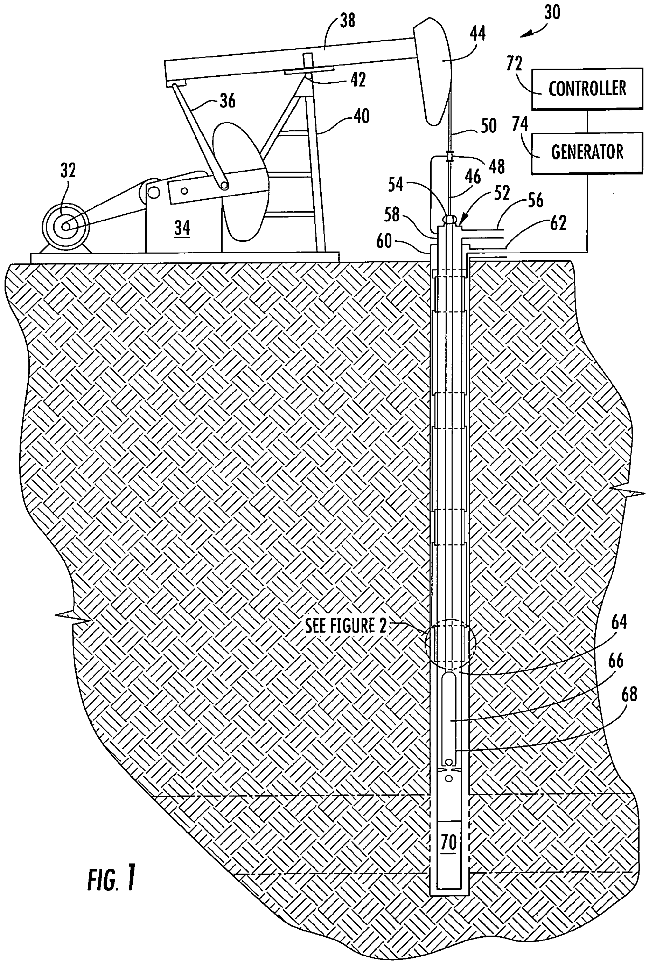

Figure 1 illustrates generally at 30 a sucker-rod pumping system having a motor 32 acting as a prime mover and generating rotational motion. Above ground components include a motor 32, which may be powered by electricity, diesel fuel, natural gas, propane, or gasoline or any other source of power. A gear reducer 34 reduces the speed of rotation and provides the torque necessary to drive the sucker-rod pumping system. The gear reducer connects a counterbalanced crank arm 36 to a walking beam 38 mounted on Samson posts 40. The walking beam pivots up and down about saddle bearing 42, converting the rotational movement of the prime mover to the alternating up-and-down movement for driving the sucker rod pumping system. A horse head 44 connects the walking beam to a polished rod 46 to reduce lateral stress on the rod string so that the rod string of the sucker rod pumping system moves linearly up and down. A connector 48 connects the polished rod 46 to a hanger 50 associated with the horse head that travels with the rotation of the horse head to maintain the polished rod in a vertical orientation. A well head assembly 52, sometimes called a "Christmas tree," completes the above ground assembly as illustrated and provides a seal 54 against the polished rod to keep fluids in the well and a pumping tee 56 on production tubing 58 for removing oil to flow lines for storage or for further processing. Well bore casing 60 typically includes a vent 62 for removing fluids that may accumulate outside the production tubing, and provides a convenient path for the removal of gas that separates from liquids and accumulates in the annular space between the well bore casing and the production tube.

Below ground, the production tube 58 fits coaxially within well bore casing 60 and extends deep into the ground to locate a petroleum reservoir. The polished rod 46 is connected to the rod string of sucker rod component sections, which extend centrally of the production tube and form an annular space 64 through which pumped fluid travels. The sections of sucker rod, coupled by couplings, provide the mechanical link between the subsurface pump plunger 66 and the polished rod 46. The sucker rod string may be constructed of the length needed using sections of sucker rod and couplings as needed. One or more, and typically a plurality of sucker rod sections may include magnets in those embodiments, described more fully hereinbelow, in which magnets are used fitted thereto in a manner known from Patent Application No. US 2009/0079199 or other patents or patent publications. The terminus of the sucker rod is fitted with a pump plunger 66 as illustrated, which fits within a pump barrel 68 attached to the end of the production tubing and coextensive with the production tube. The pump barrel is illustrated threadedly attached to a gas anchor 70, which may be included at the terminus of the production tubing, to separate gas from liquid and direct the gas to the annular space outside the production tubing.

It should be recognized that other arrangements can be used for sucker rod pumping and for other methods and apparatus for pumping oil. The invention can be used in connection with any of these and for treating other fluids. In the specific example of a sucker rod system, magnets may be placed about the rod stem; in other arrangements for fluid treatment, the magnets can be similarly placed for reciprocating or even rotating movement relative to an electromagnetic coil, so long as the fluid disposed within the conduit is exposed to a magnetic field that is induced in the coil and is provided by the magnet as well. However, several embodiments of the invention do not employ magnets and the magnetic coil may be powered from a discreet source generator and controller, illustrated in Figure 1 at 72 and 74.

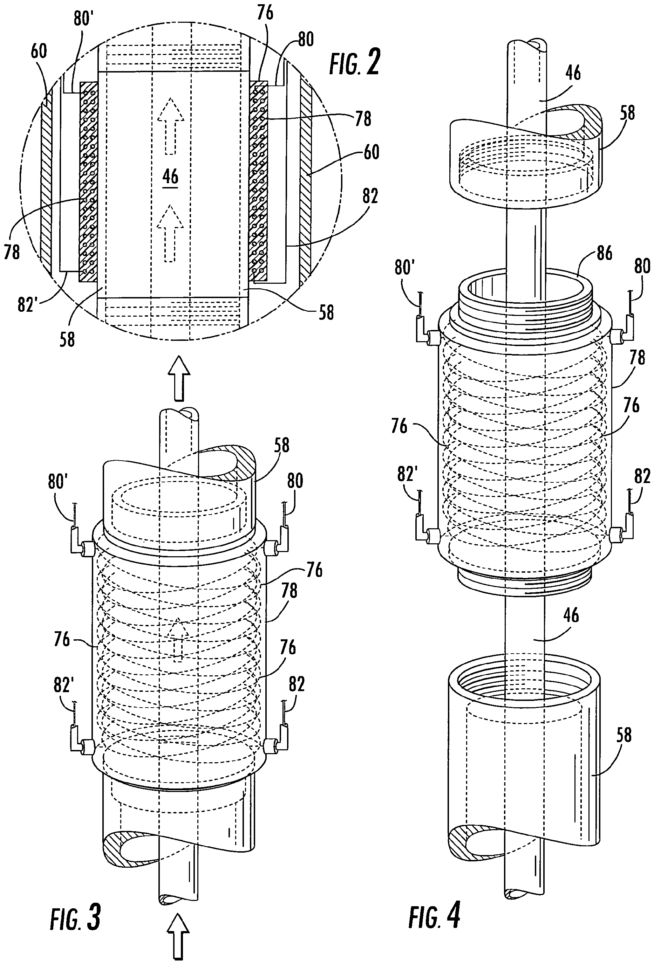

Figure 2 is a partial section through a portion of the production tube taken from Figure 1. However, it should be understood that the embodiment of an oil field production tube is illustrative and that the invention as described herein can be applied to any fluid flow conduit in which it is desired to condition a fluid to preclude precipitation of solids, or to improve flow characteristics, or to inactivate microbes. Figure 2 shows a conductor assembly 76 of the concentric tilted double-helix magnets described in U.S. Patent No. 6,921,042 and elsewhere, which are believed to be useful in the practice of the invention. The conductor assembly is positioned along a path of variable direction relative to the reference axis of the fluid transfer conduit, which in this illustration is production tube 58.

Magnets 76 are said to embody a simplified design and construction method for production of magnets with very pure field content. Conventional electromagnetic coils may also be useful in the practice of the invention, although not necessarily with equivalent results. One advantage of the double helix magnet is that the direction of the field can be more precisely controlled. Also, magnets with higher multipole fields can be obtained by using a simple modification of the coil winding procedure described in U.S. Patent No. 6,921,042 and in the direct method of manufacture of these magnets described in U.S. Patent No. 7,889,042, the contents of which references are incorporated herein by reference. The direct method of manufacture is believed to produce particularly robust magnet coils that, especially when made with advanced conductive materials that have low resistance, can produce suitable levels of magnetic flux with adequate dissipation of heat to condition fluids in harsh environments. Additionally, the coils can be produced in a multipole winding that permits customized control of field direction and intensity.

While these coils have been proposed for use in accelerator beam steering applications and with superconducting cable for applications requiring fields in excess of 2 T, and for stators in electrical machinery, propulsion magnets in magneto-hydrodynamic thrusting devices, for steering catheters through blood vessels, and for magnetic separation of unwanted components from water and other liquids, the applicant is unaware of any suggestion or recognition of the benefits of using such magnet constructions for conditioning fluids. Distinct from particle separation, in fluid conditioning particles are not necessarily removed from the fluid. Instead, the object is somewhat the opposite: to maintain the components of the fluid in suspension, to preclude precipitation, and thereby to improve fluid flow or fluid characteristics, including eliminating microbial contamination, independent of actually removing substances from the fluid.

Winding geometries can vary from turn-to-turn and from layer-to-layer to achieve desired field configurations and field quality characteristics as are described in U.S. Application Serial No. 12/133,645, incorporated herein by reference, which enables customized development of magnetic fields tailored to particular characteristics of fluids, a particular benefit of the practice of the invention in connection with fluid conditioning. Based on the composition of the fluid to be treated, its fluid flow characteristics, and correlation of these characteristics to application of a magnetic field, the optimum or near optimum magnetic field can be determined and a helical coil built to provide the desired field characteristics, including dipole and higher order multipole fields, quadrupoles, sextupoles, and the like.

It should also be recognized that, while cooling systems can be provided for the coils as described in U.S. Patent No. 6,921,042 and U.S. Patent No. 7,889,042, in many fluid conditioning applications, supplemental cooling constructions are unlikely to be necessary, making the double helix dipole and multipole coils particularly useful for fluid conditioning applications since the benefits of their construction and use can be realized in a less complex design. Superconducting windings that are sufficiently robust could be useful, although it is anticipated that ultra-low resistance windings that can generate relatively greater current intensity and a concomitant magnetic field for a smaller dissipation of heat will be particularly suitable. Conventional resistive windings prepared in a conventional manner should also be useful in connection with the practice of the invention, though not necessarily with equivalent results. Total resistance and thus an estimate of the heat produced and the degree of flow of conditioned liquid that may be required to dissipate heat, if any, can be predetermined for design purposes.

Combined function magnets are believed to be especially suitable for certain applications because these coils can simultaneously produce several multipole fields, as described in U.S. Patent 7,889,042. With such magnets, a controller can be used to power the magnet to produce magnetic fields of controlled direction and strength and can be pulsed to vary the direction, strength, and frequency, thus enabling customized fluid flow conditioning, depending on changes in fluid characteristics. In the oil industry, crude composition may vary from time-to-time as the oil is lifted and it is desirable not to renew or replace equipment and to continue well operation without significant downtime.

Magnetic field strength can also be increased by incorporating an iron jacket around the coil to limit the magnetic field around the pipe or conduit and to increase the field inwardly. Additionally, moving a magnet relative to the coil will further induce current in the coil and increase the magnetic field applied to the fluid in the conduit.

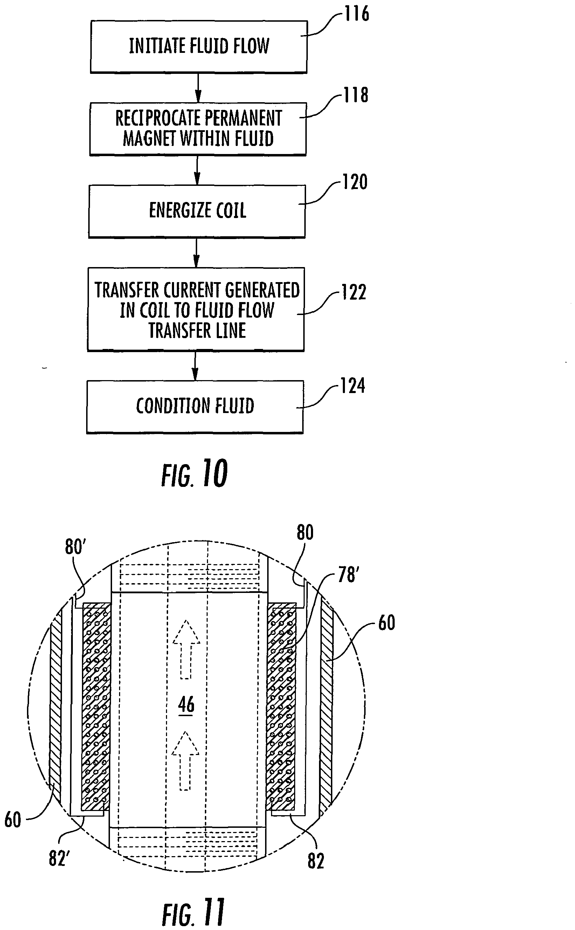

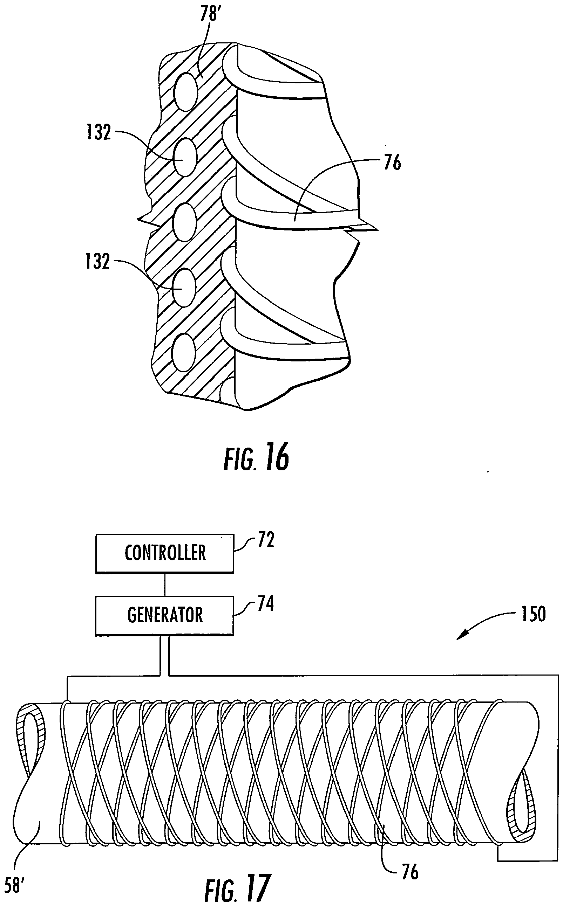

Figure 3 illustrates a cylindrical helical coil having a double helix, including one right tilted coil and one left tilted coil, through which current flows in opposite directions to produce a magnetic field. The helical coil is cylindrical because it is mounted on a typical round fluid flow conduit 58, although it should be recognized that other cross-sectional shapes of fluid flow conduits, square, rectangular, and oval, sometimes are used. It should be understood that coil layers, or rows, are insulated from each other and, in the typical application to a fluid flow line, the entire coil assembly is embedded in an insulating material 78 (Figure 2), which can be a ceramic, a composite material, or a plastic. The insulating material can be covered with a nonmagnetic sleeve, such as stainless steel, or with an iron sleeve, which is said to increase the radially inwardly directed magnetic field. It should also be understood that multilayer coil embodiments can be used. See Figure 11. It may be desirable in certain applications to use an embedment that has thermally conductive properties to convey heat to the surrounding region, which may be air or soil or a portion of a subterranean formation, as illustrated in Figure 16.

As shown in Figures 2 and 3, electrical leads extend form the coil exteriorly of the insulating embedment and are directed to the controller 72 (Figure 1). These leads are attached to lead in connectors and lead out connectors for each layer of the coil, and comprise lead in connectors 80, 80' and lead out connectors 82, 82' for the inner and outer coils, respectively, and are attached to the electrical controller 72 (Figure 1). The coil can be constructed to provide a magnetic field of particular intensity and direction and current through the coil controlled via controller 72. The controller can provide pulse control and can independently power multiple coils and multipole coils to provide pulsed directional control over the magnetic fields for adapting the system to a variety of demands. For example, knowing the paraffin content of the crude oil and the changes of temperature and pressure within the production tube can enable an operator to determine where in the tube a magnetic field is particularly useful and to control its direction and intensity.

Figure 4 illustrates a partially exploded view of the production tube section of Figure 3, including the threaded ends of the nonmagnetic section of the production tube 86 and the matched threads in the production tube portion to which it is attached. In practice, the operator for any fluid flow line could assemble the section containing the electomagnetic coils into a fluid transfer line in a similar manner.

The method of the invention includes the following steps. First, an operator evaluates the characteristics of the fluid and determines the desired characteristics of the fluid. One or more multipole conductor assemblies can be prepared that have at least two or more concentric helical coil rows of conductor, each coil having lead-in and lead-out conductor connectors. The conductor assembly is positioned along a path of variable direction relative to a reference axis and, when conducting current, generates a magnetic field, or, when in the presence of a changing magnetic field, is subjected to an induced voltage that generates a current to establish a magnetic field. The coil generates a directional and variably controllable magnetic field that is selected based on the fluid characteristics. At least one of the conductor assemblies is placed about a non-magnetic portion of fluid transfer conduit having an axial fluid flow direction. Each conductor assembly is embedded in a surrounding insulation matrix adjacent the conduit section and each coil has corresponding lead-in and lead-out conductor connectors extending exteriorly of the insulation matrix. In the practice of the method, one may select between 1) conducting current from the electrical controller through the at least one or more coils to generate a magnetic field and to control the magnetic field; and 2) applying a changing magnetic field to the coil thereby to induce a voltage that generates current and a magnetic field. In the case of the former, the lead-in and lead-out connectors are connected to an electrical controller for conducting current through the coil. In the case of the latter, the lead-in connector is connected to the fluid transfer conduit and the lead-out connector to ground. In either case, either by operation of the controller or by design of the coil, the magnetic conditioning is controllable to impact one or more characteristics of the fluid selected from the group consisting of viscosity, precipitation of fluid components, surface tension, microbial contamination, and saturation.

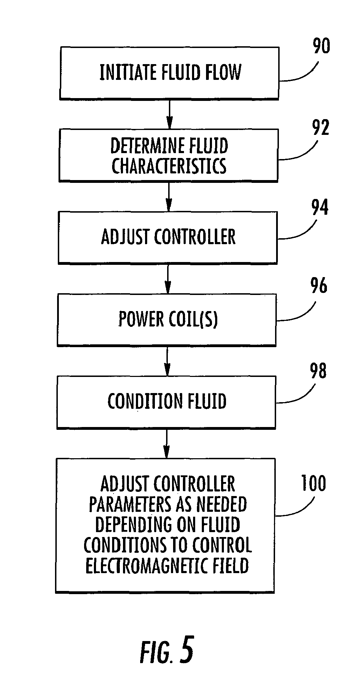

Figure 5 illustrates the steps of the practice of the method of the invention in an embodiment using the coils as described above. Once the fluid flow conduit sections are installed and the system is operational, fluid flow may be initiated in accordance with step 90. Either prior to this or after, an operator typically would make some determination about the characteristics of the fluid being treated, step 92. For example, the operator may determine whether the fluid contains microbes, or, in the case of crude petroleum, what volume of paraffin is likely to precipitate. For boiler water, the operator will normally determine the degree of hardness and precipitation of solids on heat exchanger walls. Based on these parameters, the operator can adjust the controller to settings more conducive to the magnetic field(s) that will successfully resolve the issues in fluid conditioning, including controlling flux density and direction, step 94. Once the coils are powered and a magnetic field is generated, additional adjustment may be required or as fluid conditions change, step 100, to obtain the desired fluid conditioning, step 98.

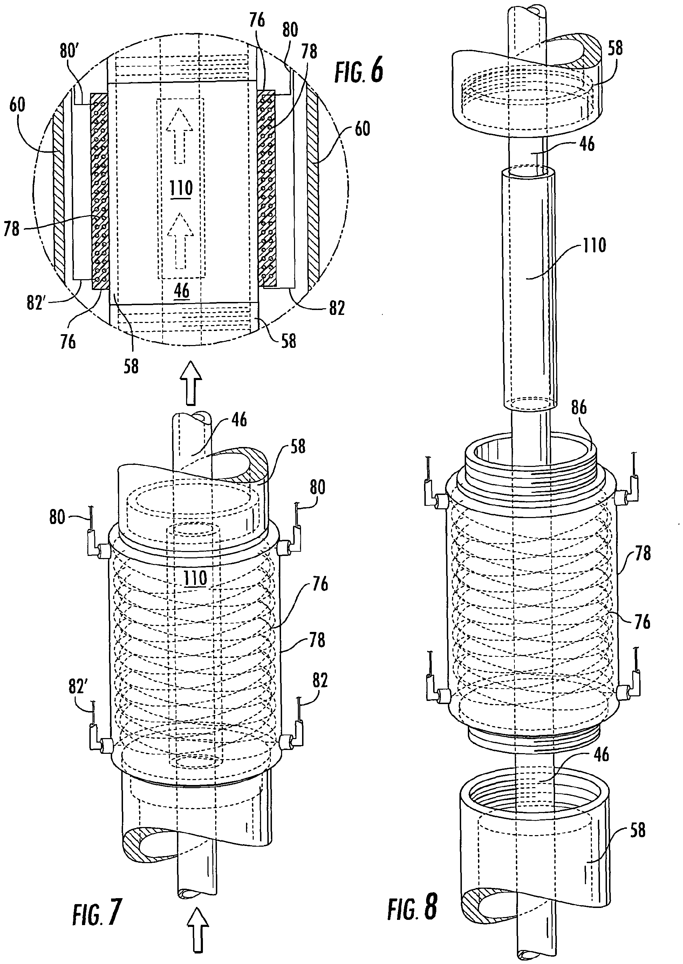

Figures 6, 7 and 8 are similar to the embodiments of Figures 2, 3 and 4 through as shown in Figure 6, the reciprocating rod string has mounted thereon a permanent magnet for inducing a current in the coil and creating a magnetic field. It has been estimated that the magnetic field output is 1,000 times greater than that of a comparable permanent magnet used in the absence of a multipole conductor assembly. Typically, in these embodiments, the coil is not powered and the direction and the intensity of the magnetic field are determined in the creation of the coil, the moving permanent magnet inducing a current and resulting in the 10x order-of-magnitude increase in magnetic field output. Instead of being connected to a controller, the input lead of a coil typically would be connected to the production tube or fluid flow conduit and the output lead would be connected to ground. Of course, the coil could be powered as set forth in the discussion above with respect to Figures 2 through 4, though not necessarily with equivalent results.

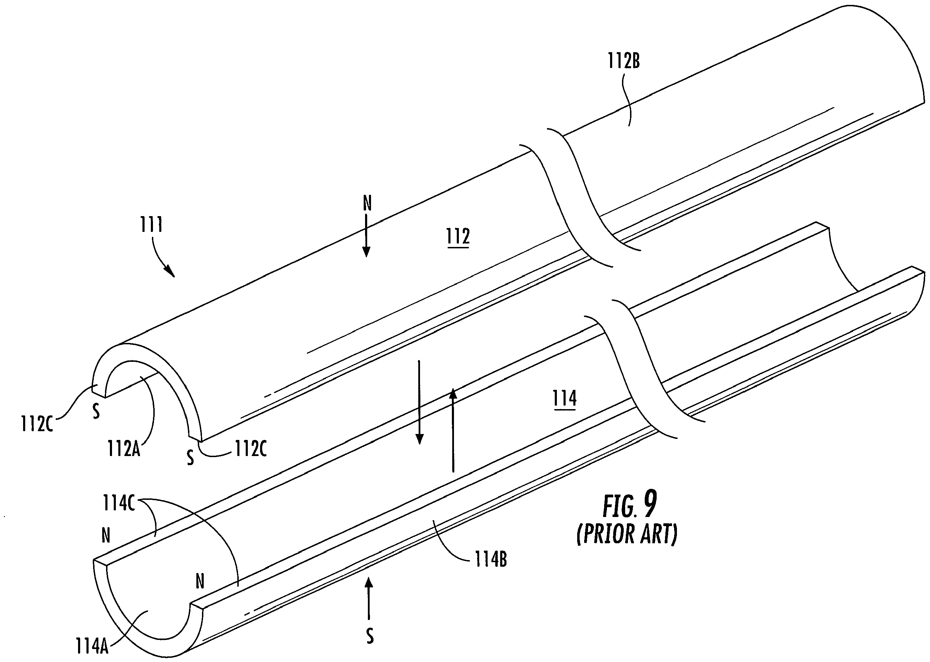

Turning now to Figure 9, Figure 9 illustrates generally at 111 a matched pair of magnets 112, 114 of the type that are preferred for use in the practice of the invention. These magnets are described in detail in Patent Application US 2010/0206732. These magnets typically are prepared from rare earth metals. Magnets comprising neodymium and have proved to provide an intense magnetic field or flux. As illustrated in Figure 9, magnets 112 and 114 have radially inner and outer arcuate surfaces, 112A, 112B and 114A, 114B, respectively, curved to form a semicircle for use in connection with the circular cross section of the sucker rod, although other arcuate shapes could be used, depending on the application. These arcuate surfaces extend axially in a longitudinal direction to form a half cylinder. The arcuate surfaces terminate transversely of the axis to form a pair of flat surfaces, 112C and 114C on magnets 112 and 114, respectively, and which connect the inner arcuate surface to the outer arcuate surface.

These magnets are not prepared as a cylinder that is cut in half, but are prepared individually and magnetized to develop a high degree of monopolar character. As illustrated, magnet 112 is diametrically charged, which is to say charged in a direction transverse to the longitudinal axis, and each of the inner and outer arcuate surfaces 112A and 112B have the same polarity, indicated in Figure 9 to be North. Magnet 114 is diametrically charged and each of the inner and outer arcuate surfaces 114A and 114B have the same polarity, opposite from that of magnet 112, indicated in Figure 9 to be South. The magnets are not in fact monopolar, and the flat longitudinal surfaces in each magnet are of opposite polarity to the arcuate surfaces in the same magnet. Thus, magnet 112 has flat surfaces 112C exhibiting a polarity of South, whereas the arcuate surfaces 112A and 112B are North. Likewise, the flat surfaces 114C of magnet 114 exhibit a polarity of North, whereas the arcuate surfaces 114A and 114B exhibit a polarity of South. Thus, by "matched" is meant that the magnets are prepared as a pair for use together, each magnet dipolar, but exhibiting a high degree of monopolar character and having a polarity opposite that of the other.

When placed about the narrow section of a sucker rod in a rod string or other arrangement for reciprocating or rotational movement relative to an electromagnetic coil, the flat surfaces of a matched pair of magnets contact each other to conjoin the magnets about the sucker rod string. The term "contact" should be understood to mean that the magnets are sufficiently close to establish a useful magnetic field contact, not that the magnet surfaces are actually touching. When placed inside a metal tube or over a rod, the flat surfaces of a matched pair of magnets magnetically contact each other to conjoin the magnets so that the intensity of the magnetic field is sufficient to condition the fluid successfully in combination with the electromagnetic coil. The magnets must move relative to the coil, either by moving the magnet or by moving the coil.

Not shown in this view, a protective jacket typically surrounds the magnet and is sealed adjacent the sucker rod to preclude contact of the magnet with crude oil, which would damage the magnet over time. It should be noted that the protective jacket and magnet are coaxial with the sucker rod so as not to interfere with operation of the sucker rod in the production tube and the egress of oil from the underground reservoir to the surface.

Figures 6, 7, and 8 illustrate generally at 110 the magnets of the invention 112 and 114, placed about a section of a sucker rod in the underground section of a sucker-rod pumping system. A section of sucker rod 46, which may vary in length from one to a few feet, terminates in a larger diameter end portion that is attached to a coupling and thereby coupled to another section of sucker rod, which couplings are not shown in these figures. A rod string of a plurality of coupled sections 46 of sucker rod is illustrated in Figure 1, and includes a plurality of non-magnetic fluid flow conduits as shown in Figures 2 and 6 (if Figure 6, then the sucker rod includes a magnet in this section). The sucker rod is placed in the center of a production tube and crude petroleum travels to the surface from an underground reservoir in the annular space between the sucker rod and the production tube.

Figure 10 illustrates the method of the invention as practiced when using a permanent magnet to energize the coil. Typically fluid flow is initiated, step 116 and, in the case of the use of a sucker rod or like pumping system with permanent magnets mounted on the rod string, initiating fluid flow will reciprocate the magnet, step 118, moving the magnet relative to the coil and inducing a current in the coil, step 120. The lead in for the coil can be attached to the section of fluid flow conduit adjacent the magnet and coil assembly, step 122, with the other lead attached to ground. The intense and amplified magnetic output of the system conditions the fluids, inactivating microbial contaminants, keeping substances in the fluid in suspension, reducing surface tension, and the like.

In the case of a sucker rod pumping system for withdrawing crude petroleum from the ground, the movement of the magnet ultimately is provided by a prime mover for generating rotary motion. A walking beam converts the rotary to alternating motion. A positive displacement pump moves the crude oil. And a rod string connects the walking beam to the pump to drive the pump by alternating motion. The rod string may have mounted thereon at least one matched pair of conjoined rare earth magnets of opposite polarity, each magnet having radially inner and outward arcuate surfaces extending axially in a longitudinal direction and terminating in a transverse direction to form a pair of flat surfaces connecting the inner arcuate surface to the outer arcuate surface, each magnet diametrically charged with its inner and outer surfaces having the same polarity and with its pair of flat surfaces having the same but opposite polarity of the arcuate surfaces, the pair of magnets conjoined by aligning the oppositely charged flat surfaces in magnetic field contact. Of course, other magnet constructions can be used, although not necessarily with equivalent results. The sucker rod pumping system further comprises a production tube within which the sucker rod extends for the transport of crude petroleum to the surface. The production tube includes one or more sections of nonmagnetic fluid flow transfer conduit, each such conduit having one or more multipole conductor assemblies having at least two or more concentric helical coil rows of conductor, each coil having lead-in and lead-out conductor connectors. The conductor assembly is positioned along a path of variable direction relative to a reference axis and, when conducting current, generates a magnetic field, or, when in the presence of a changing magnetic field, is subjected to an induced voltage that generates a current to establish a magnetic field. The coil generates a directional and controllable magnetic field so that when the sucker rod is moved up and down, one or more magnetic fields are established in the crude petroleum to reduce paraffin deposition and scaling in the production tube.

Figure 11 illustrates that multiple coil layers 78' may be used to create desired field effects.

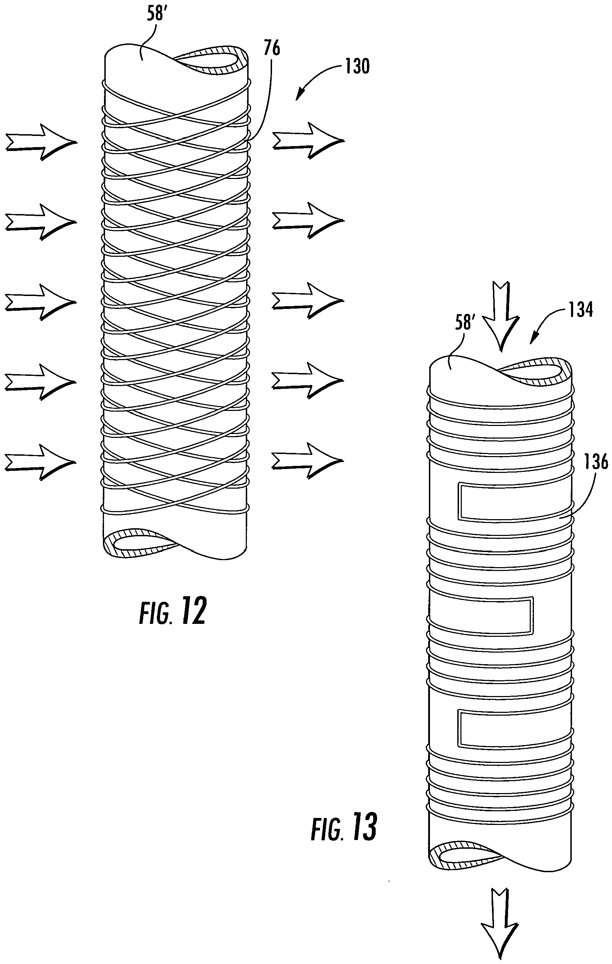

Figures 12 through 15 illustrate additional embodiments of coils that may be used in the practice of the invention to create magnetic fields that extend in particular directions, which is thought to be helpful in the conditioning of fluids, particularly fluids whose properties may respond more favorably to significant differences in magnetic field output, direction, and control. Figure 12 illustrates generally at 130 a concentric, tilted double helix coil wound about a section of a fluid transfer conduit 58' and the transverse magnetic field established as indicted by the arrows. It should be understood that the layers of coil are normally separated by a nonconductive material and that coil itself will be embedded in an insulating material about the conduit. Figure 17 illustrates this same fluid transfer conduit showing the coil leads attached to a controller for individual powering of the particular coil. Figure 16 illustrates an insulating embedment 78' in a partial view. The insulator has sufficient heat transfer properties and includes apertures 132 for air or other fluid to dissipate heat from the coils, though that is not typically considered to be problematic in fluid flow conditioning as described herein.

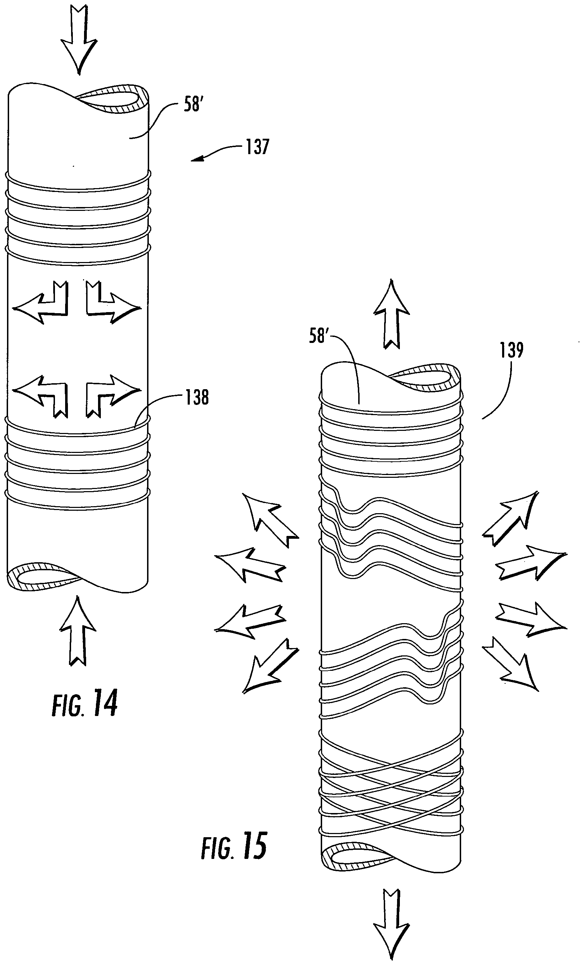

Figure 13 illustrates an embodiment 134 of a coil configuration 136 intended to create an axial magnetic flux for conditioning, a shown by the arrows. Figure 14 illustrates yet another embodiment 137 in which a coil 138 is constucted to provide axial and transverse magnetic output. Figure 15 illustrates at 139 coils of different shapes to provide magnetic flux in multiple directions. It should be understood that coils can be constructed of many shapes and used on the same fluid flow line to achieve a wide variety magnetic field characteristics that can be correlated with conditioning of fluids.

## Claims

1. A method for magnetically conditioning fluids comprising the steps of:
a) evaluating the characteristics of the fluid and determining the desired characteristics of the fluid;
b) preparing one or more multipole conductor assemblies having at least two or more concentric helical coil rows of conductor, each coil having lead-in and lead-out conductor connectors, the conductor assembly positioned along a path of variable direction relative to a reference axis and, when conducting current, generating a magnetic field, or, when in the presence of a changing magnetic field, being subjected to an induced voltage that generates a current to establish a magnetic field, the coil generating a directional and variably controllable magnetic field that is selected based on the results of step (1)(a);
c) placing at least one of the conductor assemblies prepared in step (b) about a non-magnetic portion of fluid transfer conduit having an axial fluid flow direction, each conductor assembly embedded in a surrounding insulation matrix adjacent the conduit section and each coil having corresponding lead-in and lead-out conductor connectors extending exteriorly of the insulation matrix;
d) selecting between one of: 1) connecting the lead-in and lead-out connectors to an electrical controller for conducting current through the coil, and 2) connecting the lead-in connector to the fluid transfer conduit and the lead-out connector to ground;
e) selecting between one of: 1) step (d)(1) and conducting current from the electrical controller through the at least one or more coils to generate a magnetic field and to control the magnetic field; and 2) step (d)(2) and applying a changing magnetic field to the coil thereby to induce a voltage that generates current and a magnetic field;
f) causing fluid to flow through the magnetic field generated in accordance with step (e),
g) magnetically and variably controllably conditioning the fluid by subjecting the fluid to the magnetic field generated in accordance with step (e) to impact one or more characteristics of the fluid selected from the group consisting of viscosity, precipitation of fluid components, surface tension, microbial contamination, and saturation.

2. The method of Claim 1 wherein the multipole conductor assemblies are selected from dipole and higher order magnets.

3. The method of any of Claims 1 to 2 wherein the conductor assembly produces a magnetic field selected from the group consisting of, with respect to the fluid flow axis through the fluid flow conduit, axial, transverse, or at one or more angles in between, or any combination thereof.

4. The method of any of Claims 1 to 3 wherein the lead-in and lead-out connectors are connected to an electrical controller for conducting current through the coil and the step is selected of conducting current from the electrical controller through the at least one or more coils to generate a magnetic field and to control the magnetic field, and wherein the magnetic field is variably controllable to establish with respect to the fluid flow axis through the fluid flow conduit a magnetic field directed in one or more of the axial or transverse directions or one or more directions in between, or in any combination thereof; and wherein the method further comprises the step of controlling the direction and intensity of the fields for the purpose of achieving desired characteristics in the fluid.

5. The method of any of Claims 1 to 4 further comprising the steps of placing a plurality of multipole conductor assemblies on a fluid transfer conduit and separately controlling the assemblies to generate magnetic fields in a plurality of directions and intensities in dependence on the desired characteristics of the fluid.

6. The method of any of Claims 1 to 5 wherein the step of applying a changing magnetic field to the coil thereby to induce a voltage that generates current further comprises centrally locating in the fluid flow conduit a reciprocating or rotating rod having mounted thereon at least one matched pair of conjoined rare earth magnets of opposite polarity, each magnet having radially inner and outward arcuate surfaces extending axially in a longitudinal direction and terminating in a transverse direction to form a pair of flat surfaces connecting the inner arcuate surface to the outer arcuate surface, each magnet diametrically charged with its inner and outer surfaces having the same polarity and with its pair of flat surfaces having the same but opposite polarity of the arcuate surfaces, the pair of magnets conjoined by aligning the oppositely charged flat surfaces in magnetic field contact; providing a motor for reciprocating or rotating the rod, thereby inducing a voltage in the coil.

7. The method of any of Claims 1 to 6 further comprising the step of applying the method to one or more of a sucker rod pumping system, an industrial water supply, a municipal water supply, or a petrochemical process flow line.

8. The method of any of Claims 1 to 7 wherein the fluid comprises a fluid selected form the group consisting of crude oil, refined oil, irrigation water, drinking water, natural gas, petrochemicals, and wastewater.

9. Apparatus for controlling the desired characteristics of a fluid comprising:
a) one or more multipole conductor assemblies having at least two or more concentric helical coil rows of conductor, each coil having lead-in and lead-out conductor connectors, the conductor assembly positioned along a path of variable direction relative to a reference axis and, when conducting current, generating a magnetic field, or, when in the presence of a changing magnetic field, being subjected to an induced voltage that generates a current to establish a magnetic field, the coil generating a directional and variably controllable magnetic field;
b) a non-magnetic fluid transfer conduit section with the at least one conductor assembly mounted about the section, the conductor assembly embedded in a surrounding insulation matrix adjacent the conduit section and each coil having corresponding lead-in and lead-out conductor connectors extending exteriorly of the insulation matrix, the lead-in connector electrically connected to the fluid transfer conduit section and the lead-out connector electrically connected to ground; and
c) one or more rotating or reciprocating permanent magnets located in magnetic field contact with the one or more multipole conductor assemblies and rotating or reciprocating to induced a current in the multipole conductor assembly, thereby to induce a magnetic field in the conductor assembly.

10. The apparatus of Claim 9 wherein the conductor assembly is a concentric tilted double-helix magnet.

11. The apparatus of any of Claims 9 to 10 wherein the conductor assembly is establishes an axially directed magnetic field with respect to the fluid flow axis through the fluid flow conduit.

12. The apparatus of any of Claims 9 to 11 wherein the conductor assembly establishes a magnetic field that extends in multiple axial directions.

13. The apparatus of any of Claims 9 to 12 having a plurality of conductor assemblies, permanent magnets, and fluid flow conduit sections, and having at least one permanent magnet associated with each conductor assembly, the conductor assemblies varying with respect to the direction of the magnetic field, the apparatus thereby subjecting the fluid to different magnetic fields as the fluid flows through multiple conduit sections.

14. The apparatus of any of Claims 9 to 13 wherein the apparatus is a sucker rod pumping system for withdrawing crude petroleum from the ground and having a prime mover for generating rotary motion, a walking beam for converting rotary to alternating motion, a positive displacement pump, and a rod string for connecting the walking beam to the pump to drive the pump by alternating motion, the rod string having mounted thereon at least one matched pair of conjoined rare earth magnets of opposite polarity, each magnet having radially inner and outward arcuate surfaces extending axially in a longitudinal direction and terminating in a transverse direction to form a pair of flat surfaces connecting the inner arcuate surface to the outer arcuate surface, each magnet diametrically charged with its inner and outer surfaces having the same polarity and with its pair of flat surfaces having the same but opposite polarity of the arcuate surfaces, the pair of magnets conjoined by aligning the oppositely charged flat surfaces in magnetic field contact; the sucker rod pumping system further comprising a production tube within which the sucker rod extends for the transport of crude petroleum to the surface; the production tube further comprising one or more sections of nonmagnetic fluid flow transfer conduit, each such conduit having one or more multipole conductor assemblies having at least two or more concentric helical coil rows of conductor, each coil having lead-in and lead-out conductor connectors, the conductor assembly positioned along a path of variable direction relative to a reference axis and, when conducting current, generating a magnetic field, or, when in the presence of a changing magnetic field, being subjected to an induced voltage that generates a current to establish a magnetic field, the coil generating a directional and variably controllable magnetic field; so that when the sucker rod is moved up and down, one or more magnetic fields are established in the crude petroleum to reduce paraffin deposition and scaling in the production tube.

15. The apparatus of Claim any of Claims 9 to 14 wherein the magnetic field output is 1,000 times greater than that of a permanent magnet used in the absence of a multipole conductor assembly.
